# EUROPEAN PATENT SPECIFICATION

(11) **EP 2 097 661 B1**
(45) Date of publication and mention of the grant of the patent: **19.06.2013**
(21) Application number: 07869272.0
(22) Date of filing: 14.12.2007
(51) Int. Cl.: F16J 15/08, F02F 11/00

(54) **MULTI-LAYER GASKET**
MEHRSCHICHTIGE DICHTUNG
JOINT MULTICOUCHE

(30) Priority: 15.12.2006 US 611234
(43) Date of publication of application: 09.09.2009
(73) Proprietor: Federal-Mogul Corporation, Southfield, MI 48034 (US)
(72) Inventor: CASLER, Arvid, Mundelein, IL 60060 (US); BARCLAY, Greg, Alfrison, Auckland (NZ)
(74) Representative: Becker Kurig Straus
(86) International application number: PCT/US2007/087529
(87) International publication number: WO 2008/076863

(56) References cited:
- EP-A2- 1 184 608
- JP-A- 2005 069 193
- JP-A- 2006 336 791
- US-A1- 2005 046 118

## Description

### BACKGROUND OF THE INVENTION

### 1. Field of the Invention

The present invention relates generally to relatively rigid multi-layer gaskets such as found in an internal combustion engine between.

### 2. Description of Related Prior Art

Multi-layer metal gaskets with elastically deformable embossments have been utilized to provide desired fluid seals in sealing applications associated with extreme pressure and/or temperature environments, such as various sealing applications in internal combustion engines (i.e., head gaskets, exhaust manifold gaskets, turbocharger gaskets, etc.). Multi-layer gaskets can be made from thin sheets of metal, such as steel. Embossments can be uniform and elastic in nature.

Document EP 1 184 608 A2 relates to a seal according to the preamble of claims 1, comprising a metallic gasket having a metallic sheet in which a recess formed around a hole is charged with an elastic sealing member to ensure sealing a joint between confronting members around the hole.

Document US 2005/046118 A1 relates to a seal structure for a multi-cylinder internal combustion engine, comprising a stopper having a thickness varying along its circumference.

It is an object of the invention to improve existing gasket seals.

### SUMMARY OF THE INVENTION

The invention provides a multi-layer gasket seal according to independent claim 1 and a method for forming the multi-layer gasket seal according to independent claim 13.

### BRIEF DESCRIPTION OF THE DRAWINGS

Advantages of the invention will become more readily appreciated when considered in connection with the following detailed description and appended drawings, wherein like elements have like designations. The invention is shown in Figures 7 to 17 only.

FIG. 1 is a top view of a first embodiment of a gasket seal

FIG. 1A is a partial section view of the first exemplary gasket seal taken along section line 1A-1A in FIG.1;

FIG. 1B is a partial section view of the first exemplary gasket seal taken along section line 1B-1B in FIG.1;

FIG. 2 is a perspective view of the first exemplary gasket seal;

FIG. 3 is a top view of a second embodiment of a gasket seal;

FIG. 3A is a partial section view of the second exemplary gasket seal taken along section line 3A-3A in FIG. 3;

FIG. 3B is a partial section view of the second exemplary gasket seal taken along section line 3B-3B in FIG. 3;

FIG. 4 is a perspective view of the second exemplary gasket seal;

FIG. 5 is a top view of a third embodiment of a gasket seal;

FIG. 5A is a partial section view of the third exemplary gasket seal taken along section line 5A-5A in FIG. 5;

FIG. 5B is a partial section view of the third exemplary gasket seal taken along section line 5B-5B in FIG. 5;

FIG. 6 is a perspective view of the third exemplary gasket seal;

FIG. 7 is a top view of a fourth embodiment of a gasket seal, according to the invention;

FIG. 7A is a partial section view of the fourth exemplary gasket seal taken along section line 7A-7A in FIG. 7;

FIG. 7B is a partial section view of the fourth exemplary gasket seal taken along section line 7B-7B in FIG. 7;

FIG. 8 is a perspective view of the fourth exemplary gasket seal;

FIG. 9 is a top view of a fifth embodiment of a gasket seal, according to the invention;

FIG. 9A is a partial section view of the fifth exemplary gasket seal taken along section line 9A-9A in FIG. 9;

FIG. 9B is a partial section view of the fifth exemplary gasket seal taken along section line 9B-9B in FIG. 9;

FIG. 10 is a perspective view of the fifth exemplary gasket seal;

FIG. 11 is a top view of a sixth embodiment of a gasket seal, according to the invention;

FIG. 11A is a partial section view of the sixth exemplary gasket seal taken along section line 11A-11A in FIG. 11;

FIG. 11B is a partial section view of the sixth exemplary gasket seal taken along section line 11B-11B in FIG. 11;

FIG. 12 is a perspective view of the sixth exemplary gasket seal;

FIG. 13 is a top view of a seventh embodiment of a gasket seal, according to the invention;

FIG. 13A is a partial section view of the seventh exemplary gasket seal taken along section line 13A-13A in FIG. 13;

FIG. 13B is a partial section view of the seventh exemplary gasket seal taken along section line 13B-13B in FIG. 13;

FIG. 14 is a perspective view of the seventh exemplary gasket seal;

FIG. 15 is a top view of an eighth embodiment of a gasket seal according to the invention;

FIG. 15A is a partial section view of the eighth exemplary gasket seal taken along section line 15A-15A in FIG. 15;

FIG. 15B is a partial section view of the eighth exemplary gasket seal taken along section line 15B-15B in FIG. 15;

FIG. 16 is a perspective view of the eighth exemplary gasket seal of FIG. 15;

FIG. 17 is a plot of the thickness/width of a rigid seal as a function of position along the length of the rigid seal;

FIG. 18 is a flowchart illustrating a method of making a gasket seal; and

FIG. 19 is a section view of a seal joint.

### DETAILED DESCRIPTION OF THE PREFERRED EMBODIMENT

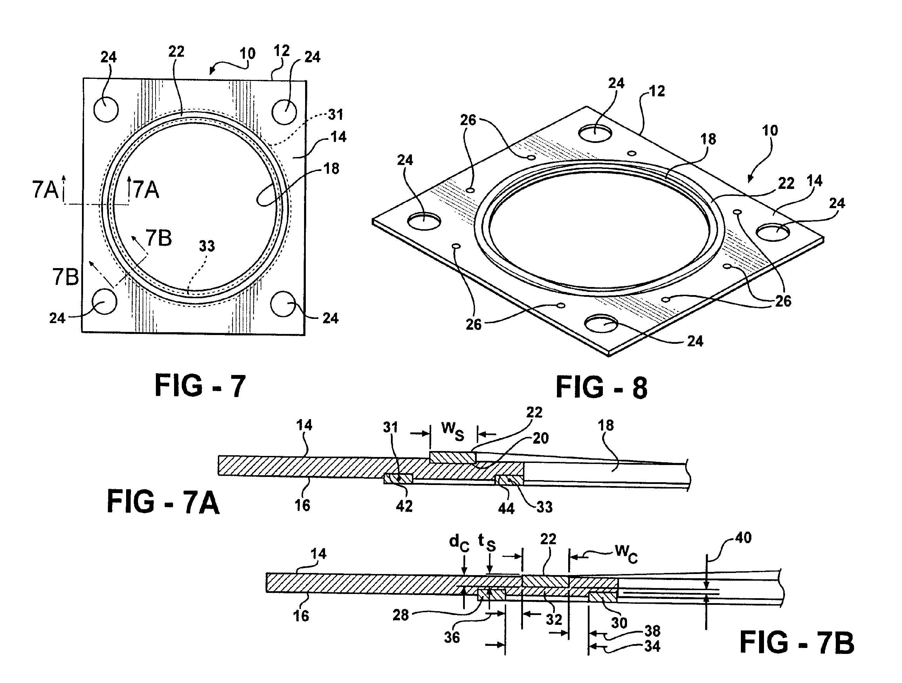

A plurality of different embodiments of the invention are shown in Figures 7-17 of the application. Similar features are shown in the various embodiments of the invention. Similar features have been numbered with a common reference numeral. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

The present invention provides a gasket seal that may be applied for many different sealing applications. The operating environment of the exemplary embodiments of the invention is automotive vehicle applications, such as a cylinder head gasket seal associated with the sealed joint between the cylinder head and the engine block of an internal combustion engine.

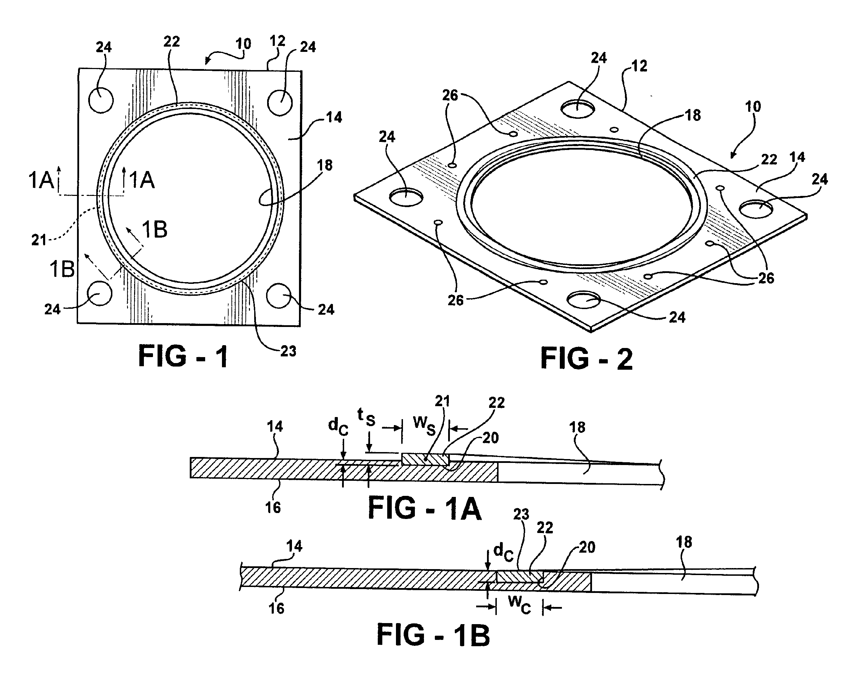

FIGS. 1, 1A, 1B and 2, illustrate a first embodiment of gasket seal 10 . The gasket seal 10 includes a rigid gasket sheet 12 which has a first sheet or sealing surface 14 and an opposing or second sheet surface 16. The opposing surface 16 is also a sealing surface in various embodiments of the invention. The rigid gasket sheet 12 also includes a sealing aperture 18 which extends through gasket sheet 12. The rigid gasket sheet 12 also includes a sealing channel 20 formed in a sealing surface 14 which has a depth d_{C} and a width w_{C}. The depth d_{C} of the channel 20 varies as shown by comparing Figures 1A and 1B. The sealing channel 20 follows a path 21 surrounding the aperture 18. A rigid seal 22 having a sealing surface 23 is disposed in the channel 20 and has a thickness t_{S} and a width w_{S}. The thickness t_{S} of rigid seal 22 is greater than or equal to the greatest depth d_{C} of the channel, such that seal 22 is a least flush with the surface 14. The width w_{C} of the sealing channel 20 corresponds to the width w_{S} of the rigid seal 22 such that the rigid seal 22 may be disposed in the sealing channel 20. However, in some alternative embodiments of the invention, it may be desirable that w_{S} and w_{C} be selected to create a slight interference fit between the rigid seal 22 and the sealing channel 20.

The rigid gasket sheet 12 may be formed from any suitably rigid material, including rigid polymers, reinforced polymers and polymer composites, metals and the like. The degree of rigidity required will depend on many factors, including the design and materials used in a flange associated with a sealed joint in which gasket seal 10 may be applied. In many applications, including many automotive vehicle applications, rigid gasket sheet 12 will preferably be formed from a metal, such as steel or an aluminum alloy. The rigid gasket sheet 12 may be of any desired thickness depending on the application requirements and the design of the seal joint in which gasket seal 10 may be utilized.

The sealing surfaces 14 are the upper and lower surface of gasket sheet 12 and depend on design considerations associated with the seal joint in which gasket seal 10 may be applied. As used herein for the first exemplary embodiment of the invention, the opposing surface 16 is simply the surface of gasket sheet 12 opposite sealing surface 14.

The exemplary aperture 18 can be associated with a passageway, typically a fluid passageway, in associated flange members of a seal joint. When gasket seal 10 is incorporated into a seal joint, aperture 18 may comprise the portion of the fluid passageway around which sealing is desired at the joint. According to the first exemplary embodiment of the invention, gasket sheet 12 will include at least one aperture 18, but may include as many apertures 18 as are required by the application and required by the configuration of the sealed joint with which gasket seal 10 is associated.

The depth d_{C} and width w_{C} of channel 20 may be the same along its length, the length being defined by the path 21 the channel 20 extends around the aperture 18. At least one of the depth d_{C} and width w_{C} of the channel 20 can vary along the length of the channel 20 in order to variably control the sealing pressure on rigid seal 22 along the length of sealing channel 20 when gasket seal 10 is installed in a seal joint, as described further herein. In the embodiment illustrated in FIGS. 1, 1A, 1B and 2, the depth of sealing channel 20 varies along its length while the channel width remains constant. The thickness t_{S} of the seal 22 may vary to to variably control the sealing pressure on rigid seal 22 along the length of sealing channel 20 when gasket seal 10 is installed in a seal joint.

The sealing channel 20 may be formed by any suitable forming method and may depend on the material used for gasket sheet 12. This may involve removal of material from the sealing surface 14 of gasket sheet 12, as well as direct or indirect forming of the sealing channels in the sealing surface 14 of gasket sheet 12. For metals, this may include utilization of various material removal or forming techniques, such as various forms of machining, metal forming (i.e., coining) and the like. For certain polymers, this may also include forming or molding of the sealing channels. Electrochemical machining (ECM) can be used to form the channel 20.

The rigid seal 22 may be formed from any suitably rigid material, including rigid polymers, reinforced polymers and polymer composites, metals and the like. As with gasket sheet 12, the degree of rigidity required will depend on many factors, such as the design and materials used in the flange associated with the sealed joint in which gasket seal 10 is being applied. The rigid seal 12 can be formed from a metal, such as steel, or an aluminum alloy. For high temperature and/or high strength applications, such as a combustion cylinder seals, materials having good high temperature strength and corrosion resistance may be used, such as various stainless steels. The thickness t_{S} and width w_{S} of the seal 22 allows the seal 22 to be disposed in sealing channel 20. The sealing surface 23 is at least flush with the surface 14 in the first exemplary embodiment of the invention, but protrudes slightly above the sealing surface 14 at positions along the length of the channel 20. The rigid seal 22 of the first exemplary embodiment of the invention has a constant thickness t_{S} along the length of the channel 20. In the first embodiment of the invention, the width w_{S} of rigid seal 22 and the width w_{C} of the channel 20 are constant along the length of the channel 20. However, either or both of the thickness t_{S} and the width w_{S} of rigid seal 22 may be varied along the length of the channel 20. Generally, with respect to variation of the widths w_{S}, w_{C} of rigid seal 22 and sealing channel 20, it is preferred that variations in the width of rigid seal 22 conform generally to variations in the width of sealing channel 20, as shown in the embodiment of FIGS. 1, 1A, 1B and 2.

The rigid seal 22 can be attached to gasket sheet 12 by any of a number of well-known joining methods, such as welding, staking, adhesives and the like. In addition, gasket sheet 12 may also include other features such as bolt holes 24 which are adapted to receive bolts (not shown) in order to form a seal joint. Gasket seal 10 may also include other apertures 26, which may be sealing or non-sealing apertures, such as coolant metering apertures in the case illustrated in this embodiment where gasket seal 10 is a cylinder head gasket.

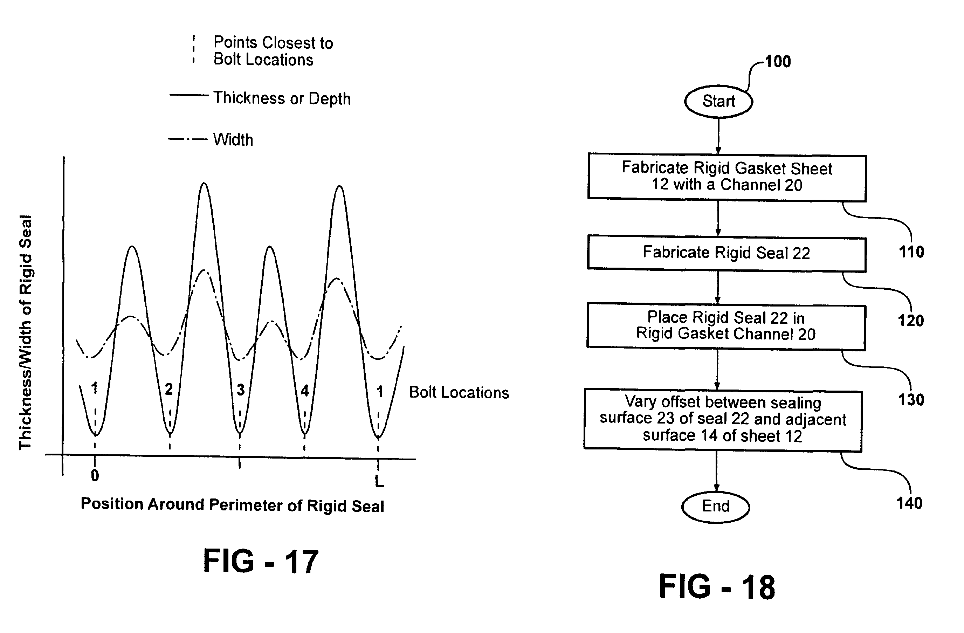

One exemplary profile for variation of the depth d_{C} of sealing channel 20, when gasket seal 10 includes bolt holes 24 for receiving bolts (not shown) for sealing a seal joint, has the depth d_{C} of the channel 20 generally lesser at locations which are closer to the bolt holes 24 and generally greater at points in the channel 20 which are farther from the bolt holes 24. A depth profile of this type is illustrated in FIG. 17.

Several of the possible embodiments of gasket seal 10 which may be obtained through variation of the rigid seal 22 and sealing channel 20 are described below. As used below, "length" refers to both the length of the seal 22 and the channel 20.

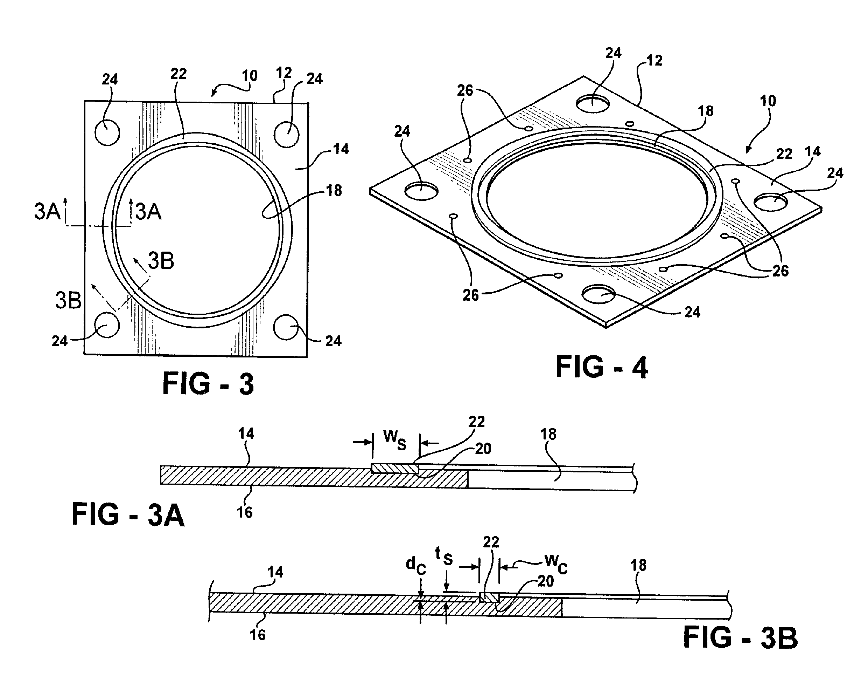

A second embodiment is illustrated in FIGS. 3, 3A, 3B and 4. In this embodiment, the depth d_{C} of sealing channel 20 is constant along its length while the width w_{C} of sealing channel 20 varies along the length of the channel 20. The width w_{C} of the sealing channel 20 and the width w_{S} of the seal 22 are essentially the same along the length. The thickness t_{S} of rigid seal 22 is constant along its length.

A preferred profile for variation of the width w_{C} of sealing channel 20 and the width w_{S} of the seal 22 when gasket seal 10 includes bolt holes 24 for receiving bolts (not shown) for sealing a seal joint, has the width w_{C} of the sealing channel 20 generally lesser at locations which are closer to the bolt holes 24 and generally greater at points in the channel which are farther from the bolt holes 24. A width profile of this type is illustrated in FIG. 17.

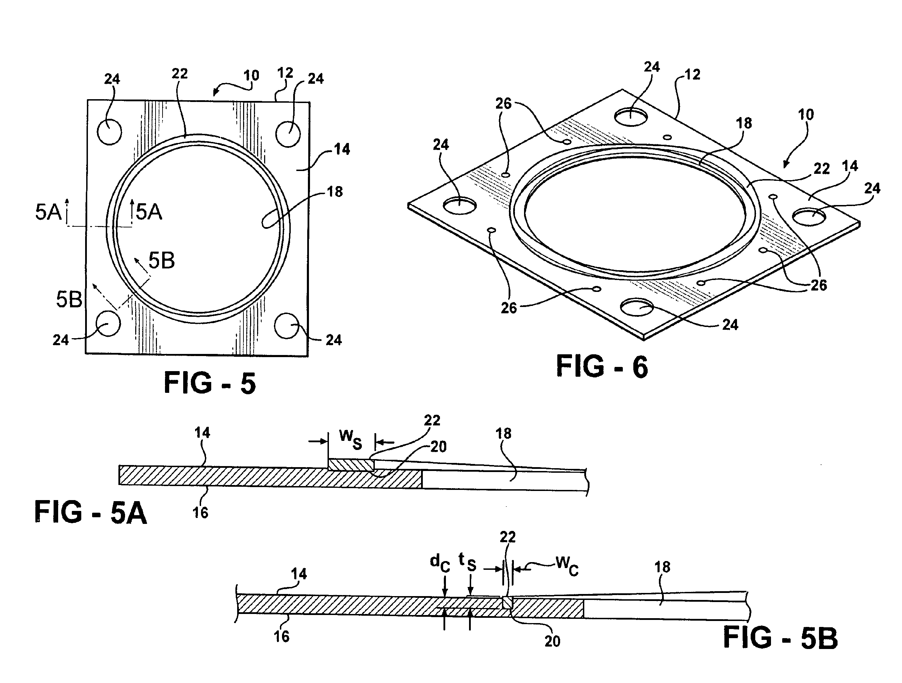

A third embodiment is illustrated in FIGS. 5, 5A, 5B and 6. In this embodiment, the depth d_{C} and width w_{C} of sealing channel 20 vary along its length. The thickness t_{S} of rigid seal 22 is constant along its length while the width w_{S} varies along its length. The variations in the width w_{S} of rigid seal 22 conform generally to variations in the width w_{C} of sealing channel 20. A preferred profile for variation of the width w_{C} of sealing channel 20, when gasket seal 10 includes bolt holes 24 for receiving bolts (not shown) for sealing a seal joint, has the width w_{C} of the sealing channel 20 generally lesser and depth d_{C} of the sealing channel 20 generally greater at locations which are closer to the bolt holes 24 and the width w_{C} generally greater and depth d_{C} generally lesser at points in the channel 20 which are farther from the bolt holes 24. A width profile of this type is illustrated in FIG. 17.

While gasket seals 10 illustrated generally in FIGS. 1 - 5B are rigid gasket seals which affect seal joints and seals by imparting deformation in one or more mating sealing flanges associated with seal joint, according to the invention gasket seal 10 is embodied in several alternate designs which additionally incorporate two support members on the opposing surface 16 of gasket sheet 12. Support members include outer support member 28 and inner support member 30, such as shown in FIGS. 7A and 7B. The outer support member 28 is placed radially outwardly of the sealing channel 20 and the inner support member 30 is placed radially inwardly of the sealing channel 20. The outer support member 28 and inner support member 30 are disposed on opposite sides of a portion 32 of gasket sheet 12. The portion 32 can flex within gasket seal 10 to enhance sealing between gasket seal 10 and elements of a seal joint, such as sealing flanges.

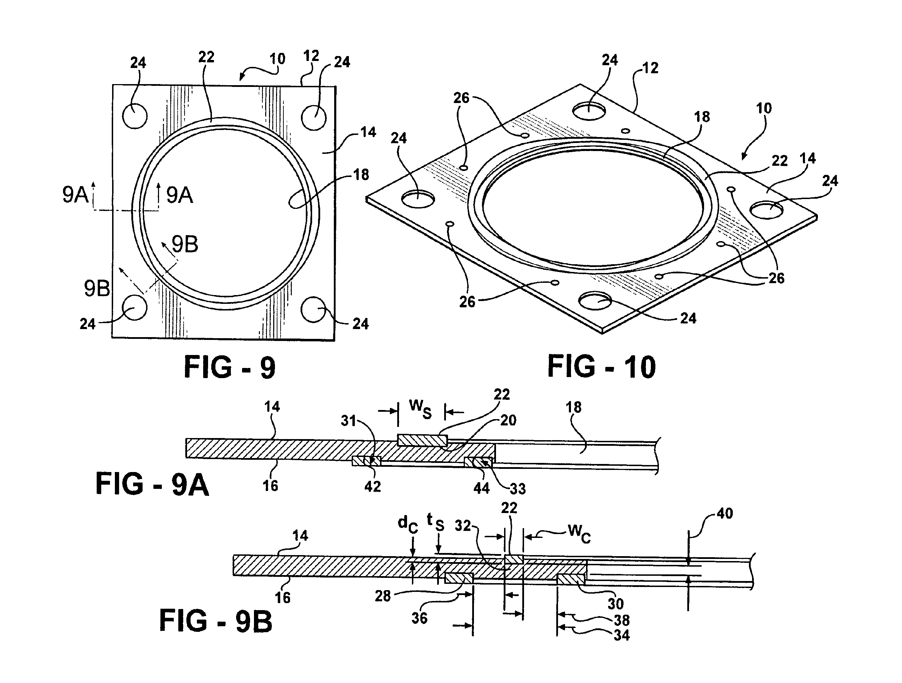

The degree of flexure or compliance of gasket seal 10 can be varied by changing the lateral spacing 34 between the outer support member 28 and the inner support member 30 and/or the spacings 36, 38 between the inner and outer members 30, 28 with respect to the rigid seal 22. The degree of flexure may also be varied by changing the vertical spacing 40 between support members 28 and 30 and the rigid seal 22. The vertical spacing 40 can be varied by controlling the depth of sealing channel 20 and/or groove channels (see for example FIGS. 9A and 9B). The depth of one or more of these channels may also be varied along their lengths. Embodiments of rigid seal 10 incorporating inner support member 30 and outer support member 28 are described further below.

A fourth embodiment, according to the invention, is illustrated in FIGS. 7, 7A, 7B and 8. In this embodiment, the width w_{C} of sealing channel 20 is constant along its length while the depth d_{C} of sealing channel 20 varies along its length. The thickness t_{S} and width w_{S} of rigid seal 22 are constant along its length. The width w_{S} of rigid seal 22 conforms generally to the width w_{C} of sealing channel 20. Gasket seal 10 also includes outer support member 28 and inner support member 30. Outer support member 28 is spaced radially outwardly of rigid seal 22 along the length of sealing channel 20. Inner support member 30 is spaced radially inwardly of rigid seal 22 along the length of sealing channel 20. Outer support member 28 is located in an outer support channel 42 extending along a path 31 around the aperture 18. The exemplary outer support channel 42 has a constant depth and width along its length. Inner support member 30 is located in an inner support channel 44 extending along a path 33 around the aperture 18. The paths 23, 31, 33 extend parallel to one another, concentric in the exemplary embodiment of the invention. The exemplary inner support channel 44 has a constant depth and width along its length. A preferred profile for variation of the depth of sealing channel 20, when gasket seal 10 includes bolt holes 24 for receiving bolts (not shown) for sealing a seal joint, has the depth d_{C} of the sealing channel 20 generally lesser at locations which are closer to the bolt holes 24 and generally greater at points in the channel 20 which are farther from the bolt holes 24. A depth profile of this type is illustrated in FIG. 17. The lateral spacings 34, 36 and 38 and the vertical spacing 40 may be determined in accordance with the sealing application requirements.

A fifth embodiment, according to the invention, is illustrated in FIGS. 9, 9A, 9B and 10. In this embodiment, the depth d_{C} of sealing channel 20 is constant along its length while the width w_{C} of sealing channel 20 varies along its length. The thickness ts of rigid seal 22 varies along its length between t_{S}1 and t_{S}2 while the width w_{S} varies. The width w_{S} of rigid seal 22 conforms generally to the width w_{C} of sealing channel 20. Gasket seal 10 also includes outer support member 28 and inner support member 30. Outer support member 28 is spaced radially outwardly of rigid seal 22 along the length of sealing channel 20. Inner support member 30 is spaced radially inwardly of rigid seal 22 along the length of sealing channel 20. Outer support member 28 is located in outer support channel 42. The examplary outer support channel 42 has a constant depth and width along its length. Inner support member 30 is located in inner support channel 44. The exemplary inner support channel 44 has a constant depth and width along its length. Any of the illustrated alternative embodiments, as well as any alternative embodiment not shown, could be practiced wherein either the depth of width of the inner or outer channels 42, 44 could be varied. A preferred profile for variation of the depth d_{C} of sealing channel 20, when gasket seal 10 includes bolt holes 24 for receiving bolts (not shown) for sealing a seal joint, has the depth d_{C} of the sealing channel 20 generally lesser at locations which are closer to the bolt holes 24 and generally greater at points in the channel 20 which are farther from the bolt holes 24. A depth profile of this type is illustrated in FIG. 17. The lateral spacings 34, 36 and 38 and the vertical spacing 40 may be determined in accordance with the sealing application requirements.

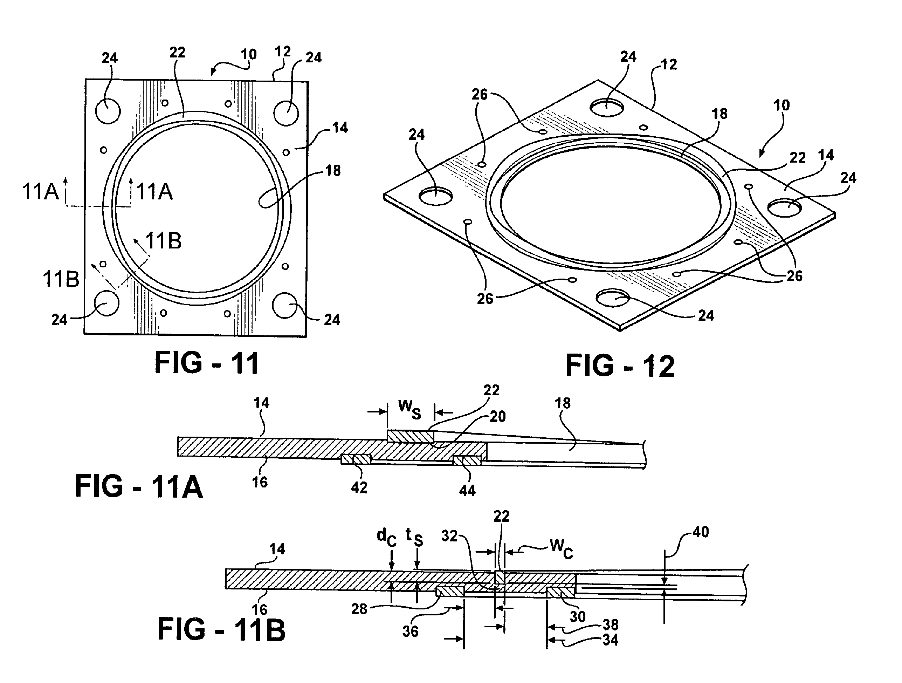

A sixth embodiment, according to the invention, is illustrated in FIGS. 11, 11A, 11B and 12. In this embodiment, both the width w_{C} and depth d_{C} of sealing channel 20 vary along its length. The thickness t_{S} of rigid seal 22 is constant along its length while the width w_{S} varies. The width w_{S} of rigid seal 22 conforms generally to the width w_{C} of sealing channel 20. Gasket seal 10 also includes outer support member 28 and inner support member 30. Outer support member 28 is spaced radially outwardly of rigid seal 22 along the length of sealing channel 20. Inner support member 30 is spaced radially inwardly of rigid seal 22 along the length of sealing channel 20. Outer support member 28 is located in outer support channel 42. As illustrated, outer support channel 42 has a constant depth and width along its length. Inner support member 30 is located in inner support channel 44. As illustrated, inner support channel 44 has a constant depth and width along its length. A preferred profile for variation of the width w_{C} of sealing channel 20, when gasket seal 10 includes bolt holes 24 for receiving bolts (not shown) for sealing a seal joint, has the width w_{C} of the sealing channel 20 generally lesser and depth d_{C} of the sealing channel 20 generally greater at locations which are closer to the bolt holes 24 and the width w_{C} generally greater and depth d_{C} generally lesser at points in the channel 20 which are farther from the bolt holes 24. A width profile of this type is illustrated in FIG. 17. The lateral spacings 34, 36 and 38 and the vertical spacing 40 may be determined in accordance with the sealing application requirements.

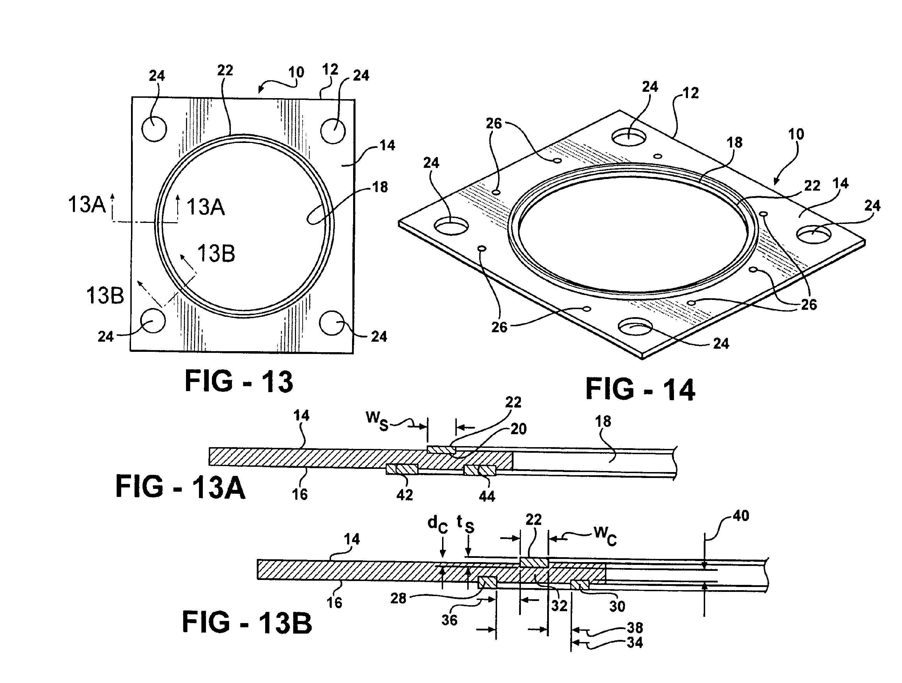

A seventh embodiment, according the invention, is illustrated in FIGS. 13, 13A, 13B and 14. In this embodiment, the width w_{C} and depth d_{C} of sealing channel 20 are constant along its length. The thickness t_{S} and width w_{S} of rigid seal 22 are constant along the length of sealing channel 20. The width w_{S} of rigid seal 22 conforms generally to the width w_{C} of sealing channel 20. Gasket seal 10 also includes outer support member 28 and inner support member 30. Outer support member 28 is spaced outwardly of rigid seal 22 along the length of sealing channel 20. Inner support member 30 is spaced inwardly of rigid seal 22 along the length of sealing channel 20. Outer support member 28 has constant thickness and a width which varies along the length. Inner support member 30 has constant thickness and a width which varies along the length. Outer support member 28 is located in outer support channel 42. As illustrated, outer support channel 42 has a constant depth and a width which varies along its length. Inner support member 30 is located in inner support channel 44. As illustrated, inner support channel 44 has a constant depth and a width which varies along its length. A preferred profile for variation of the width of outer support channel 42 and inner channel 44, when gasket seal 10 includes bolt holes 24 for receiving bolts (not shown) for sealing a seal joint, has the widths of the support members 28, 30 generally lesser (thereby increasing lateral spacing 34) and depths of the support members 28, 30 generally greater at locations which are closer to the bolt holes 24 and the widths generally greater and depths generally lesser at points in the channel which are farther from the bolt holes 24. A width profile of this type is illustrated in FIG. 17. The lateral spacings 34, 36 and 38 and the vertical spacing 40 may be determined in accordance with the sealing application requirements.

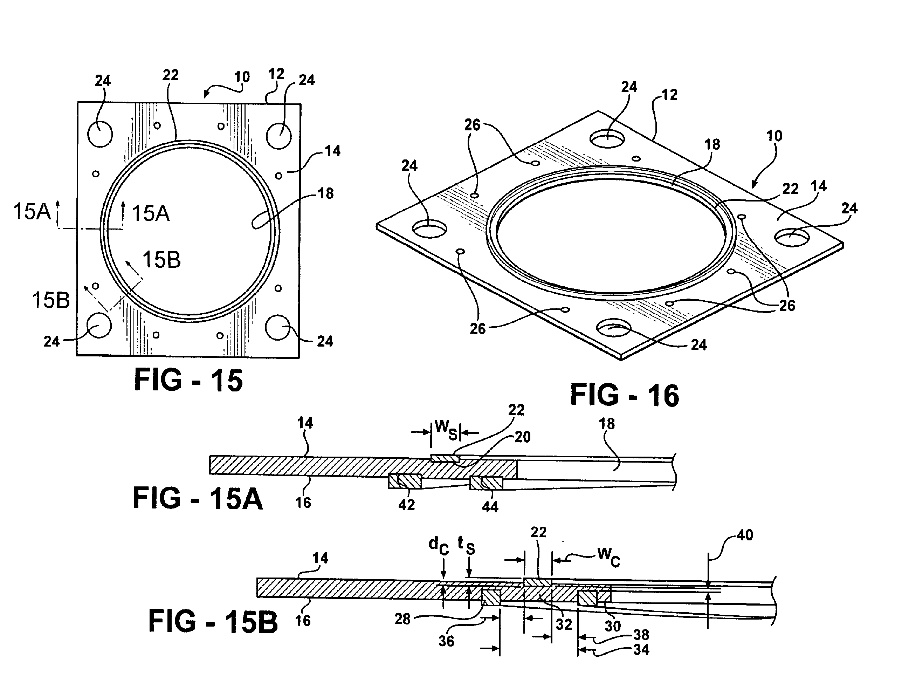

An eighth embodiment, according to the invention, is illustrated in FIGS. 15, 15A, 15B and 16. In this embodiment, the width w_{C} and depth d_{C} of sealing channel 20 are constant along its length. The thickness t_{S} and width w_{S} of rigid seal 22 are constant along the length of sealing channel 20. The width w_{S} of rigid seal 22 conforms generally to the width w_{C} of sealing channel 20. Gasket seal 10 also includes outer support member 28 and inner support member 30. Outer support member 28 is spaced radially outwardly of rigid seal 22 along the length of sealing channel 20. Inner support member 30 is spaced radially inwardly of rigid seal 22 along the length of sealing channel 20. Outer support member 28 has constant thickness and a width which varies along the length. Inner support member 30 has constant thickness and a width which varies along the length. Outer support member 28 is located in outer support channel 42. As illustrated, outer support channel 42 has a variable depth and width along its length. Inner support member 30 is located in inner support channel 44. As illustrated, inner support channel 44 has a varying depth and a width which varies along its length. A preferred profile for variation of the depths of the channels 42, 44, when gasket seal 10 includes bolt holes 24 for receiving bolts (not shown) for sealing a seal joint, has the depths of the channels 42, 44 generally greater at locations close to the bolt holes 24 and depths generally greater farther from the bolt holes 24. A depth profile of this type is illustrated in FIG. 17. The lateral spacings 34, 36 and 38 and the vertical spacing 40 may be determined in accordance with the sealing application requirements.

FIG. 18 is a simplified flow diagram of one exemplary method for forming a gasket seal 10. The method includes the step of fabricating 110 a rigid gasket sheet 12 with a channel 20. The method also includes the step of of fabricating 120 a rigid seal 22. The seal 22 is placed in the channel 20 at step 130. The width w_{S} of the rigid seal 22 and the width w_{C} of the channel 20 are selected in view of one another such that the seal 22 will fit within the channel 20. The method also includes the step 140 of varying the offset between the sealing surface 23 of the seal 22 and the adjacent surface 14 of the sheet 12. The thickness t_{S} of rigid seal 22 and the depth d_{C} of the channel 20 are selected in view of one another such that the offset between the sealing surface 23 of the seal 22 and the adjacent surface 14 of the sheet 12 will vary. The offset may be zero at some positions along the path 21 followed by the seal 22 and channel 20 (also referred to as the length of the channel 20 and/or the length of the seal 22). The offset will be greater than zero at some positions along the path 21 followed by the seal 22 and channel 20.

The step of fabricating 110 of rigid gasket sheet 12 may be performed using any fabrication technique, in view of the material used for gasket sheet 12. Where a metal gasket sheet 12 is used, it may be blanked from a metal sheet. The apertures may also be blanked using a blanking die. The sealing channel 20 may be formed by various well-known metal forming methods, including milling, coining, electrochemical machining (ECM) and the like. When the depth and/or the width of sealing channel 20 varies along the length, it is preferred that the channel is formed using ECM. When gasket sheet 12 is a polymer or composite, any suitable polymer or composite fabrication method may be used both to form the gasket sheet 12 and the sealing channels 20. This may include injection molding or other polymer or composite molding methods. When inner support member 30 and outer support member 28 are utilized and applied to opposing surface 16 of gasket sheet 12, they may be applied to opposing surface 16 directly or placed in inner support channel 44 and outer support channel 42, respectively, as described above. When gasket sheet 12 incorporates outer support channel 42 and inner support channel 44, these channels may be formed using the same forming methods utilized to form sealing channel 20, or may utilize other forming methods described herein, depending, for example, on whether these channels are to have a constant depth or a variable depth around their parameters as described above.

The step of fabricating 120 the rigid seal 22 may be performed by any fabrication technique. When rigid seal 22 comprises a metal, it may be blanked from a sheet, formed from pressed powder particles and sintered, forged and the like. When rigid seal 22 is a polymer or composite, any suitable polymer or composite fabrication method may be used both to form rigid seal 22. This may include injection molding or other polymer or composite molding methods.

The rigid seal 22 can be attached to the rigid gasket sheet 12 by any method. When metals are used for rigid seal 22 and rigid gasket sheet 12, any of a number of metal joining techniques may be utilized, such as welding, brazing, soldering, staking, adhesives and the like. When polymers or composites are utilized for rigid seal 22, it may be attached using adhesives or other suitable means and methods for bonding the polymer to gasket sheet 12.

When support members, such as support members 28, 30, are incorporated into gasket seal 10, the method 100 can also include appropriate steps such as fabricating the support members having a thickness, a width and a shape that corresponds to the shape of the rigid seal 22 and is adapted to be spaced outwardly and inwardly of the rigid seal 22 along the length of the channel 20 on the opposing surface 14 of the rigid gasket sheet 12. Fabricating may be performed using any of a number of well-known fabricating techniques. When the outer rigid support member 28 is a metal, it may be formed by stamping, forging, sintering powder metal particles and the like. When outer rigid support member 28 is a polymer or composite, any suitable polymer or composite fabrication method may be used both to form rigid seal 22. This may include injection molding or other polymer or composite molding methods.

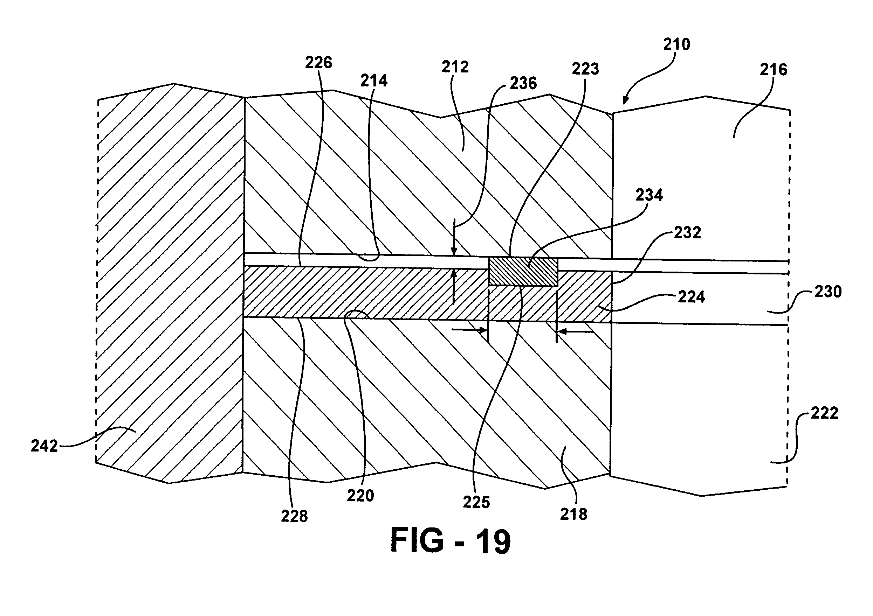

FIG. 19 illustrates the elements of a seal joint 210 in an exemplary operating environment. Seal joint 210 can be used in various seal joint applications, such as those within an internal combustion engine, such as the seal joint between the cylinder head and engine block, the seal joint between the cylinder head and-exhaust manifold and, for turbocharged engines, the seal joint between the exhaust manifold and the turbocharger. The seal joint 210 may also be utilized in other seal joint applications, such as those which are subjected to extremes of temperature and pressure.

Referring to FIG. 19, seal joint 210 includes a first member 212 having a first sealing surface 214 and a first aperture 216 therein. Seal joint 210 also includes a second member 218 having a second sealing surface 220 and a second aperture 222 therein. As an example, the first member 212 may be the cylinder head and second member 218 may be the engine block. First aperture 216 and second aperture 222 may be apertures associated with any of a number of fluid passageways. In another example, the first member 212 may be an exhaust manifold and second member 218 may be a cylinder head. In such an example, the first aperture 216 may be to an associated exhaust passageway within the exhaust manifold and second aperture 222 may be to an exhaust port in the cylinder head. It will be recognized that seal joint 210 is also applicable to any of a number of other seal joints within an internal combustion engine.

Referring to FIG. 19, seal joint 210 also includes a metal gasket sheet 224. The sheet 22 may or may not be supported by support members, such as sheet 12 was shown supported by support members 28, 30. Metal gasket sheet 224 is located between first sealing surface 214 and second sealing surface 220. Metal gasket sheet 224 has an upper surface 226, lower surface 228 and an aperture 230. As may be seen from the illustration of FIG. 19, the apertures 216, 222, 230 are aligned. Aperture 230 has a perimeter 232. Perimeter 232 may comprise any necessary shape. In the case where metal gasket sheet 224 is a cylinder head gasket, perimeter 232 may have a cylindrical shape. In the case where gasket 224 is a gasket seal for a turbo charger, perimeter 232 may be generally rectangular or square, typically with rounded corners such as shown in FIG. 2. The perimeter 232 may vary from the shape of the apertures 216, 222.

Metal gasket sheet 224 also includes protruding rigid seal 234 which surrounds the aperture 230. In the embodiment illustrated in FIG. 18, the a sealing surface 223 of the rigid seal 234 is offset from the adjacent surface 226 a height 236. The offset varies from height 236 along the length of aperture 230.

A threaded bolt 242 can be used to apply a compressing or sealing force on the seal 234 and sheet 224, and causing elastic deformation to the member 212 about the rigid seal 234. The elastic deformation occurs in the surface 214 is significantly different than sealing using multilayer metal gaskets, either with or without distance or stopper layers. Multilayer metal gaskets provide sealing based on deformation of the sealing features, such as sealing beads, of the gasket material. In contrast, the present invention results in sealing by elastic deformation of at least one of the members to be sealed. The section thicknesses of first member 212 and second member 218 which are associated with first sealing surface 214 and second sealing surface 220 are typically much larger than the thicknesses of the layers of a conventional multilayer metal gasket. As such, the stress and strain levels and distribution within first member 212 and second member 218 may be established so that they are not of magnitude or concentration sufficient to cause fatigue cracking in these members during the operation of the device associated with seal joint 210. Further, the combination of first member 212, metal gasket 224, rigid seal 234 and second member 218 provides a significantly stiffer seal joint 210 than seal joints which utilize multilayer metal gaskets. The fact that seal joint 210 is less compliant than seal joints which incorporate multilayer metal gaskets is also expected to improve the performance of seal joint 210 with respect to issues such as joint distortion, as has been described above with respect to seal joints which seal the combustion cylinder in cylinder head gasket applications. Alternately, if rigid seal 234 incorporates a rigid outer support member and a rigid inner support member as described herein, rigid seal 234 is cantilevered with respect to the portion of metal gasket between the members, thereby permitting flexure within the metal gasket and sealing of the seal on first member 212 and second member 218. In this alternate embodiment, sealing results primarily from flexure within the gasket rather than elastic deformation of the first member 212 and second member 218.

Metal gasket sheet 224 may be made from any suitable metal in view of the particular application environment. In some environments, such as internal combustion engine applications, metal gasket sheet 224 may be made from stainless steel, such as type 301 stainless steel. Metal gasket sheet 224 may be of any suitable shape depending on the application, and may incorporate a single aperture 230 or a plurality of apertures 230. In the case where metal gasket sheet 224 incorporates a plurality of apertures 230, apertures may be of the same shape and size or different shapes and sizes. Metal gasket sheet 224 may be of any suitable thickness depending on the application, in internal combustion engine applications, the thickness of metal gasket sheet 224 is generally in the range of about 0.008 - 0.10 inches.

Rigid seal 234 may be made from any suitably rigid material including metals, composite materials and organic or inorganic polymers. By rigid, it can be meant that the thickness, width and material selected for the seal provide less compliance, preferably significantly less compliance, than the portions of first sealing surface 214 proximate rigid seal 234, such that most of the elastic deformation occurs within surface 214 rather than within rigid seal 234. Thus, the material and design of rigid seal 234 will be selected so as to satisfy this requirement in view of the materials and designs of first member 212 and its first sealing surface 214 and second member 218 and its second sealing surface 220. Where rigid seal 234 is a metal, the metal of rigid seal 234 may be the same as the metal of metal gasket sheet 224 or a different metal. For example, in internal combustion engine applications, rigid seal 234 may be a stainless steel, such as type 301 stainless steel.

Rigid seal 234 may be located with respect to perimeter 230 in any desired configuration or arrangement. For example, rigid seal 234 may be located directly adjacent to perimeter 230, or may be spaced inwardly from perimeter 230 as illustrated in the embodiment shown herein.

As described above, the thickness and width contour profile of the rigid seal 234 and the depth and width profile of the channel 225 varies as a function of position along the length of rigid seal 234 and channel 225. The ranges these dimensions can vary in response to the particular operating enviroment. It is preferred that the offest between surfaces 223, 226 generally greater farther from fastener 242 and generally lesser closer to fastener 242. It is preferred that the widths of the rigid seal 234 and channel 225 is generally greater farther from the fastener 242 and generally lesser closer to the fastener 242. It is generally preferred to make the sealing force or pressure along the length of rigid seal 234 uniform. Computer aided design and modeling may be utilized to determine a contour profile that provides a uniform sealing pressure along rigid seal 234.

Obviously, many modifications and variations of the present invention are possible in light of the above teachings. It is, therefore, to be understood that within the scope of the appended claims, the invention may be practiced otherwise than as specifically described. The invention is defined by the claims.

## Claims

1. A multi-layer gasket seal (10), comprising:
a sheet (12) having a first sheet surface (14) and an aperture (18) piercing said first sheet surface (14) and a first channel (20) defined in said first sheet surface (14) extending along a first path (21) around said aperture (18) and having a depth (d_{c}) and a width (w_{c}); and
a ring seal disposed in said first channel (20) and having a thickness (tₛ) defined between a sealing surface (23) facing away from said channel (20) and an opposing surface facing said channel (20);
**characterized in that**
said sheet (12) further comprises:
a second sheet surface (16) opposite said first sheet surface (14);
a second channel (42) defined in said second sheet surface (16) extending along a second path (31) parallel to said first path (21) around said aperture (18) and having a depth and a width, wherein said first channel (20) is disposed between said second channel (42) and said aperture (18);
a first support member (28) received in said second channel (42) and having a first thickness;
a third channel (44) defined in said second sheet surface (16) extending along a third path (33) parallel to said first path (21) around said aperture (18) and having a depth and a width, wherein said third channel (44) is disposed between said first channel (20) and said aperture (18); and
a second support member (30) received in said third channel (44) and having a second thickness;
and
**in that** one of said thickness (tₛ) of said ring seal (22) and said depth (d_{c}) of said first channel (20) varies about said aperture (18) such that a distance between said sealing surface (23) and said first sheet surface (14) varies about said aperture (18).

2. The multi-layer gasket seal (10) of claim 1, wherein said width of said first channel (20) varies along said first path (21).

3. The multi-layer gasket seal (10) of claim 1, wherein said depth of said first channel (20) varies along said first path (21).

4. The multi-layer gasket seal (10) of claim 3, wherein said thickness of said ring seal (22) is constant along said first path (21).

5. The multi-layer gasket seal (10) of claim 1, wherein said thickness of said ring seal (22) varies along said first path (21).

6. The multi-layer gasket seal (10) of claim 5, wherein said depth of said first channel (20) is constant along said first path (21).

7. The multi-layer gasket seal (10) of claim 1, wherein said sheet (12) is metal.

8. The multi-layer gasket seal (10) of claim 7, wherein said sheet (12) is steel.

9. The multi-layer gasket seal (10) of claim 8, wherein said ring seal (22) is metal.

10. The multi-layer gasket seal (10) of claim 1, wherein said depths of said second and third channels (42, 44) vary along said respective second and third paths (31, 33).

11. The multi-layer gasket seal (10) of claim 1, wherein said thicknesses of said first and second support members (28, 30) vary along said respective second and third paths (31,33).

12. The multi-layer gasket seal (10) of claim 1, wherein said widths of said second and third channels (42, 44) vary along said respective second and third paths (31, 33).

13. A method (100) for forming multi-layer gasket seal (10), comprising the steps of:
piercing a first sheet (12) with an aperture (18);
defining a first channel (20) having a depth (d_{c}) and a width (w_{c}) in a first sheet surface (14) of the first sheet (12) extending along a first path (21) around the aperture (18);
disposing (130) a ring seal (22) in the first channel (20) having a thickness (tₛ) defined between a sealing surface (23) facing away from said first channel (20) and an opposing surface facing said channel (20);
**characterized by**
defining a second channel (42) in a second sheet surface (16) opposite said first sheet surface (14) extending along a second path (31) parallel to said first path (21) around said aperture (18) and having a depth and a width, such that said first channel (20) is disposed between said second channel (42) and said aperture (18);
disposing a first support member (28) having a first thickness in said second channel (42);
defining a third channel (44) in said second sheet surface (16) extending along a third path (33) parallel to said first path (21) around said aperture (18) and having a depth and a width, such that said third channel (44) is disposed between said first channel (20) and said aperture (18);
disposing a second support member (30) having a second thickness in said third channel (44); and
varying one of the thickness (tₛ) of the ring seal (22) and the depth (d_{c}) of said first channel (20) about the aperture (18) such that a distance between the sealing surface (23) and the first sheet surface (14) varies about the aperture (18).

## Patentansprüche

1. Mehrlagige Dichtung (10), umfassend:
eine Platte (12) mit einer ersten Plattenfläche (14) und einer Öffnung (18), welche die erste Plattenfläche (14) durchstößt, und einem ersten Kanal (20), der in der ersten Plattenfläche (14) definiert ist, der sich entlang eines ersten Pfads (21) um die Öffnung (18) herum erstreckt und eine Tiefe (d_{c}) und eine Breite (w_{c}) aufweist; und
eine Ringdichtung, die in dem ersten Kanal (20) platziert ist und eine Dicke (tₛ) aufweist, die zwischen einer Dichtfläche (23), die dem Kanal (20) abgewandt ist, und einer gegenüber liegenden Fläche definiert ist, die dem Kanal (20) zugewandt ist;
**dadurch gekennzeichnet, dass**
die Platte (12) weiter umfasst:
eine zweite Plattenfläche (16) gegenüber der ersten Plattenfläche (14);
einen zweiten Kanal (42), der in der zweiten Plattenfläche (16) definiert ist, der sich entlang eines zweiten Pfads (31) parallel zu dem ersten Pfad (21) um die Öffnung (18) herum erstreckt und eine Tiefe und eine Breite aufweist, wobei der erste Kanal (20) zwischen dem zweiten Kanal (42) und der Öffnung (18) platziert ist;
ein erstes Stützelement (28), das in dem zweiten Kanal (42) aufgenommen ist und eine erste Dicke aufweist;
ein dritter Kanal (44), der in der zweiten Plattenfläche (16) definiert ist, der sich entlang eines dritten Pfads (33) parallel zu dem ersten Pfad (21) um die Öffnung (18) herum erstreckt und eine Tiefe und eine Breite aufweist, wobei der dritte Kanal (44) zwischen dem ersten Kanal (20) und der Öffnung (18) platziert ist; und
ein zweites Stützelement (30), das in dem dritten Kanal (44) aufgenommen ist und eine zweite Dicke aufweist;
und
dadurch, dass die Dicke (tₛ) der Ringdichtung (22) oder die Tiefe (d_{c}) des ersten Kanals (20) um die Öffnung (18) herum derart variiert, dass eine Entfernung zwischen der Dichtfläche (23) und der ersten Plattenfläche (14) um die Öffnung (18) herum variiert.

2. Mehrlagige Dichtung (10) nach Anspruch 1, wobei die Breite des ersten Kanals (20) entlang des ersten Pfads (21) variiert.

3. Mehrlagige Dichtung (10) nach Anspruch 1, wobei die Tiefe des ersten Kanals (20) entlang des ersten Pfads (21) variiert.

4. Mehrlagige Dichtung (10) nach Anspruch 3, wobei die Dicke der Ringdichtung (22) entlang des ersten Pfads (21) konstant ist.

5. Mehrlagige Dichtung (10) nach Anspruch 1, wobei die Dicke der Ringdichtung (22) entlang des ersten Pfads (21) variiert.

6. Mehrlagige Dichtung (10) nach Anspruch 5, wobei die Tiefe des ersten Kanals (20) entlang des ersten Pfads (21) konstant ist.

7. Mehrlagige Dichtung (10) nach Anspruch 1, wobei die Platte (12) aus Metall besteht.

8. Mehrlagige Dichtung (10) nach Anspruch 7, wobei die Platte (12) aus Stahl besteht.

9. Mehrlagige Dichtung (10) nach Anspruch 8, wobei die Ringdichtung (22) aus Metall besteht.

10. Mehrlagige Dichtung (10) nach Anspruch 1, wobei die Tiefen des zweiten und des dritten Kanals (42, 44) entlang des jeweiligen zweiten und dritten Pfads (31, 33) variieren.

11. Mehrlagige Dichtung (10) nach Anspruch 1, wobei die Dicken des ersten und des zweiten Stützelements (28, 30) entlang des jeweiligen zweiten und dritten Pfads (31, 33) variieren.

12. Mehrlagige Dichtung (10) nach Anspruch 1, wobei die Breiten des zweiten und des drittens Kanals (42, 44) entlang des jeweiligen zweiten und dritten Pfads (31, 33) variieren.

13. Verfahren (100) zum Bilden einer mehrlagigen Dichtung (10), umfassend die Schritte:
Durchstoßen einer ersten Platte (12) mit einer Öffnung (18);
Definieren eines ersten Kanals (20) mit einer Tiefe (d_{c}) und einer Breite (w_{c}) in einer ersten Plattenfläche (14) der ersten Platte (12), der sich entlang eines ersten Pfads (21) um die Öffnung (18) herum erstreckt;
Platzieren (130) einer Ringdichtung (22) in dem ersten Kanal (20), die eine Dicke (tₛ) aufweist, die zwischen einer Dichtfläche (23), die dem Kanal (20) abgewandt ist, und einer gegenüber liegenden Fläche definiert ist, die dem Kanal (20) zugewandt ist;
**gekennzeichnet durch**
Definieren eines zweiten Kanals (42) in einer zweiten Plattenfläche (16) gegenüber der ersten Plattenfläche (14), der sich entlang eines zweiten Pfads (31) parallel zu dem ersten Pfad (21) um die Öffnung (18) herum erstreckt und eine Tiefe und eine Breite aufweist, so dass der erste Kanal (20) zwischen dem zweiten Kanal (42) und der Öffnung (18) platziert ist;
Platzieren eines ersten Stützelements (28), das eine erste Dicke aufweist, in dem zweiten Kanal (42);
Definieren eines dritten Kanals (44) in der zweiten Plattenfläche (16), der sich entlang eines dritten Pfads (33) parallel zu dem ersten Pfad (21) um die Öffnung (18) herum erstreckt und eine Tiefe und eine Breite aufweist, so dass der dritte Kanal (44) zwischen dem ersten Kanal (20) und der Öffnung (18) platziert ist;
Platzieren eines zweiten Stützelements (30), das eine zweite Dicke aufweist, in dem dritten Kanal (44); und
Variieren der Dicke (tₛ) der Ringdichtung (22) oder der Tiefe (d_{c}) des ersten Kanals (20) um die Öffnung (18) herum, so dass eine Entfernung zwischen der Dichtfläche (23) und der ersten Plattenfläche (14) um die Öffnung (18) herum variiert.

## Revendications

1. Joint multi-couches (10) comprenant :
une feuille (12) ayant une première surface de feuille (14) et une ouverture (18) perçant ladite première surface de feuille (14) et un premier canal (20) défini dans ladite première surface de feuille (14) s'étendant le long d'une première piste (21) autour de ladite ouverture (18) et ayant une profondeur (dc) et une largeur (wc) ; et
une bague d'étanchéité disposée dans ledit premier canal (20) et ayant une épaisseur (ts) définie entre une surface d'étanchéité (23) se détournant dudit canal (20) et une surface opposée faisant face audit canal (20) ;
**caractérisé en ce que**
ladite feuille (12) comprend en outre :
une deuxième surface de feuille (16) opposée à ladite première surface de feuille (14) ;
un deuxième canal (42) défini dans ladite deuxième surface de feuille (16) s'étendant le long d'une deuxième piste (31) parallèle à ladite première piste (21) autour de ladite ouverture (18) et ayant une profondeur et une largeur, dans lequel ledit premier canal (20) est disposé entre ledit deuxième canal (42) et ladite ouverture (18) ;
un premier élément de support (28) reçu dans ledit deuxième canal (42) et ayant une première épaisseur ;
un troisième canal (44) défini dans ladite deuxième surface de feuille (16) s'étendant le long d'une troisième piste (33) parallèle à ladite première piste (21) autour de ladite ouverture (18) et ayant une profondeur et une largeur, dans lequel ledit troisième canal (44) est disposé entre ledit premier canal (20) et ladite ouverture (18) ; et
un deuxième élément de support (30) reçu dans ledit troisième canal (44) et ayant une deuxième épaisseur ;
et
**en ce qu'**une de ladite épaisseur (ts) de ladite bague d'étanchéité (22) et ladite profondeur (dc) dudit premier canal (20) varie autour de ladite ouverture (18) de sorte qu'une distance entre ladite surface d'étanchéité (23) et ladite première surface de feuille (14) varie autour de ladite ouverture (18).

2. Joint multi-couches (10) selon la revendication 1, dans lequel ladite largeur dudit premier canal (20) varie le long de ladite première piste (21).

3. Joint multi-couches (10) selon la revendication 1, dans lequel ladite profondeur dudit premier canal (20) varie le long de ladite première piste (21).

4. Joint multi-couches (10) selon la revendication 3, dans lequel ladite épaisseur de ladite bague d'étanchéité (22) est constante le long de ladite première piste (21).

5. Joint multi-couches (10) selon la revendication 1, dans lequel ladite épaisseur de ladite bague d'étanchéité (22) varie le long de ladite première piste (21).

6. Joint multi-couches (10) selon la revendication 5, dans lequel ladite profondeur dudit premier canal (20) est constante le long de ladite première piste (21).

7. Joint multi-couches (10) selon la revendication 1, dans lequel ladite feuille (12) est en métal.

8. Joint multi-couches (10) selon la revendication 7, dans lequel ladite feuille (12) est en acier.

9. Joint multi-couches (10) selon la revendication 8, dans lequel la bague d'étanchéité (22) est en métal.

10. Joint multi-couches (10) selon la revendication 1, dans lequel lesdites profondeurs desdits deuxième et troisième canaux (42, 44) varient le long desdites deuxième et troisième pistes respectives (31, 33).

11. Joint multi-couches (10) selon la revendication 1, dans lequel lesdites épaisseurs desdits premier et deuxième éléments de support (28, 30) varient le long desdites deuxième et troisième pistes respectives (31, 33).

12. Joint multi-couches (10) selon la revendication 1, dans lequel lesdites largeurs desdits deuxième et troisième canaux (42, 44) varient le long desdites deuxième et troisième pistes respectives (31, 33).

13. Procédé (100) de formation d'un joint multi-couches (10), comprenant les étapes consistant à :
percer une première feuille (12) d'une ouverture (18) ;
définir un premier canal (20) ayant une profondeur (dc) et une largeur (wc) dans une première surface de feuille (14) de la première feuille (12) s'étendant le long d'une première piste (21) autour de l'ouverture (18) ;
disposer (130) une bague d'étanchéité (22) dans le premier canal (20) ayant une épaisseur (ts) définie entre une surface d'étanchéité (23) se détournant dudit premier canal (20) et une surface opposée faisant face audit canal (20) ;
**caractérisé par**
définir un deuxième canal (42) dans une deuxième surface de feuille (16) opposée à ladite première surface de feuille (14) s'étendant le long d'une deuxième piste (31) parallèle à ladite première piste (21) autour de ladite ouverture (18) et ayant une profondeur et une largeur, de sorte que ladite premier canal (20) soit disposé entre ledit deuxième canal (42) et ladite ouverture (18) ;
disposer un premier élément de support (28) ayant une première épaisseur dans ledit deuxième canal (42) ;
définir un troisième canal (44) dans ladite deuxième surface de feuille (16) s'étendant le long d'une troisième piste (33) parallèle à ladite première piste (21) autour de ladite ouverture (18) et ayant une profondeur et une largeur, de sorte que ladite troisième canal (44) soit disposé entre ledit premier canal (20) et ladite ouverture (18) ;
disposer un deuxième élément de support (30) ayant une deuxième épaisseur dans ledit troisième canal (44) ; et
varier une de l'épaisseur (ts) de la bague d'étanchéité (22) et la profondeur (dc) dudit premier canal (20) autour de l'ouverture (18) de sorte qu'une distance entre la surface d'étanchéité (23) et la première surface de feuille (14) varie autour de l'ouverture (18).
